# EUROPEAN PATENT APPLICATION

(11) **EP 1 302 270 A1**
(43) Date of publication of application: **16.04.2003**
(21) Application number: 02257118.6
(22) Date of filing: 14.10.2002
(51) Int. Cl.: B23K 11/31, B23K 11/25, G01L 13/02

(54) **Pressure sensor**

(30) Priority: 12.10.2001 GB 0124595
(71) Applicant: SAVAIR + ARO LIMITED, Verwood Wimborne Dorset BH31 6AX (GB)
(72) Inventor: Helliker, Peter, Poole, Dorset BH15 4HP (GB); Tiberghien, Olivier, 37360 Semblancay (FR)
(74) Representative: Bérogin, Francis

(57) **Abstract**

A resistance welding apparatus comprises a piston having opposing faces for applying welding electrodes to a workpiece, means for measuring a pressure ratio across opposing faces of the piston and means for controlling the supply of welding current to the electrodes in dependence on the pressure ratio. A method of resistance welding and a pressure sensor for use in the resistance welding apparatus are also provided.

## Description

The present invention relates to a pressure sensor for use in, or in conjunction with resistance welding apparatus, to a method of resistance welding, and to resistance welding apparatus.

Pneumatic cylinders (usually known as "guns") are used in large numbers as part of resistance welding apparatus in motor vehicle manufacturing, and in the manufacture of white goods (washing machines etc). Because of the high production volume it is important that the cyclic welding time is minimised. The preferred embodiments of this invention are directed to providing resistance welding apparatus capable of low cyclic times.

The present invention is particularly applicable to apparatus comprising pneumatic cylinders. The word pneumatic is used herein to mean operable by a compressible fluid, usually but not necessarily compressed air.

A pressure sensor according to the present invention can advantageously be used in conjunction with the apparatus described in International Patent Application No. WO 01/78934 in the name of the present applicant, the entire disclosure of which is herein incorporated by reference.

The preferred embodiments of the present invention are further directed to accurate control of the timing of the application of the welding current.

In one aspect the present invention provides a method of resistance welding comprising monitoring a pressure ratio across opposing faces of a piston used to apply electrodes to a workpiece and controlling the supply of welding current to the electrodes in dependence on the pressure ratio.

Preferably, one said face of the piston is exposed to a pressure moving the piston to apply the electrodes to the workpiece, and the other said face is exposed to a pressure of fluid being vented to permit movement of the piston.

Preferably, the method comprises supplying the welding current when the pressure ratio exceeds a predetermined value.

In a further aspect the present invention provides resistance welding apparatus comprising a piston having opposing faces for applying welding electrodes to a workpiece, means for measuring a pressure ratio across opposing faces of the piston and means for controlling the supply of welding current to the electrodes in dependence on the pressure ratio.

Preferably, the piston comprises a first said face to which, in operation, pressure is applied to move the piston to apply the electrodes to the workpiece, and another said face which, in operation, is exposed to a pressure in fluid being vented to permit movement of the piston.

In a further aspect the present invention provides a pressure sensor for resistance welding apparatus, the sensor comprising a piston having a first face and an oppositely-directed second face larger than the first face, means for applying to the first face pressure fluid utilised to effect closing movement of electrodes of the welding apparatus to apply a welding force to a workpiece, means for applying to the second face pressure fluid being vented to permit such electrode movement, the relative areas of the first and second faces being chosen such that the force exerted by pressure fluid applied to the first face exceeds the force exerted by the pressure fluid acting on the second face when the welding force applied to the workpiece is a predetermined proportion of a maximum value, and means for controlling an electrical signal in response to movement of the piston resulting from the difference in forces applied to its first and second faces.

Preferably, the controlling means is a switch which is caused to change state by movement of the piston, for example a proximity switch.

Preferred features of the present invention will now be described, by way of example only, with reference to the accompanying drawings, in which:-
Figure 1 shows a section through a pressure sensor according to the present invention in a first state;
Figure 2 shows a section of the pressure sensor in a second state;
Figure 3 shows a first embodiment of welding apparatus including a pressure sensor according to the present invention in the first state;
Figure 4 shows the apparatus of Figure 3, the pressure sensor being in the second state;
Figure 5 shows a second embodiment of resistance welding apparatus including a pressure sensor according to the present invention in the first state;
Figure 6 shows the apparatus of Figure 5, the pressure sensor being in the second state.

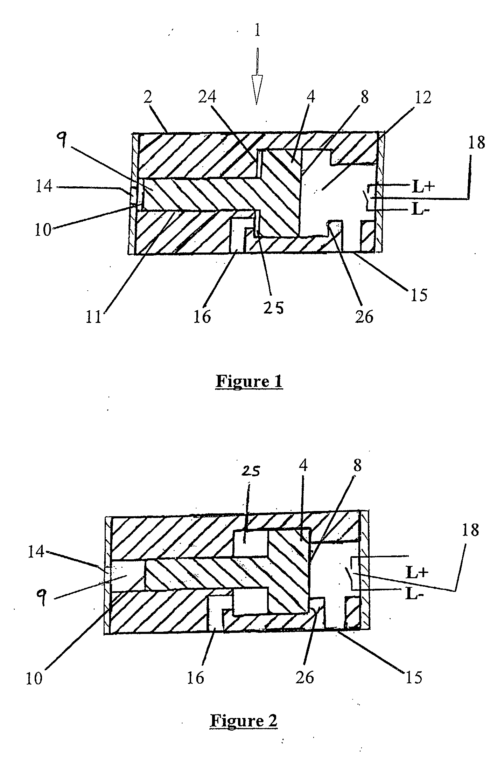

The pressure sensor 1 shown in Figures 1 and 2 comprises a piston 4 moveable in pressure sensor body 2. As shown in Figures 1 and 2, piston 4 is moveable towards the right and the left. It will be appreciated that terms such as left, right, etc. are used for convenience having regard to the orientation of the device shown in the drawings. It may of course be operated in any convenient attitude.

Body 2 has a weld forward pilot port 14 and a weld return pilot port 15. Body 2 further defines a first pressure chamber 9 in fluid communication with weld forward pilot port 14 and a second pressure chamber 12 in fluid communication with weld return pilot port 15. The right-hand piston face 8 of piston 4 sealingly bounds the second pressure chamber 12, and the left-hand piston face 10 of piston 4 sealingly bounds the first pressure chamber 9. The right-hand piston face 8 is larger than the left-hand piston face 10. Movement of piston 4 to the right is limited by flange 26 (when the right-hand piston face 8 of piston 4 abuts against flange 26), and to the left by rear wall 24. A bore 11 of smaller cross section than the second pressure chamber 12 extends from the rear wall 24 towards the left. The left-hand portion of the bore 11 forms the first pressure chamber 9. The left-hand portion of piston 4 is moveable within bore 11. A proximity switch 18 is located in or at the second pressure chamber 12. Its location is chosen such that movement of piston 4 from abutment at rear wall 24 towards its stop at flange 26 causes proximity switch 18 to change its state and that the return movement of piston 4 causes proximity switch 18 to change its state again. Conveniently the body 2 and piston 4 are of plastics material, the piston having a metal insert the approach of which is sensed by the proximity switch 18. A suitable switch is sold by Pepperel & Fuchs.

A vent passage 16 extends from a space 25 bounded by rear wall 24 the piston to atmosphere, to prevent air becoming compressed in the space 25 and impeding movement of the piston.

Operation of the pressure sensor shown in Figures 1 and 2 will now be described. For the sake of simplicity some reference numerals shown in Figure 1 have been omitted from Figure 2.

Since the right-hand piston face 8 is larger (in the example shown substantially larger) than the left-hand piston face 10 the piston 4 will, if the pressure supplied to weld return pilot port 15 is equal or larger than the pressure supplied to weld forward pilot port 14, be in its leftmost position. That is, the right-hand portion of piston 4 will abut against rear wall 24. Piston 4 will remain in its leftmost position provided the pressure at weld forward pilot port 14 is not greater than the pressure at weld return pilot port 15 times the ratio of the area of the right-hand piston face 8 to the area of the left-hand piston face 10. When the pressure at weld forward pilot port 14 exceeds this equilibrium pressure piston 4 will start to move towards the right. This moment is shown in Figure 1. Piston 4 will continue to move towards the right until the right-hand piston face 8 abuts against flange 26 as shown in Figure 2. As piston 4 moves towards the right air may pass from the atmosphere through vent passage 16 into the space 25 between the right-hand portion of piston 4 and rear wall 24.

Movement of the piston 4 towards the right causes proximity switch 18 to change its state. This change of state can be used to control the start of the application of welding current to the welding electrodes.

Subsequently, when the pressure at weld forward pilot port 14 drops below the pressure at weld return pilot port 15 times the ratio of the area of the right-hand piston face 8 to the area of the left-hand piston face 10 piston 4 moves towards the left to its initial state where piston 4 abuts against rear wall 24. During this movement air from the space 25 passes through vent passage 16 to atmosphere. Further, the return movement of piston 4 causes proximity switch 18 to change its state again. The sensor 1 has then returned to its initial state ready for the next welding cycle.

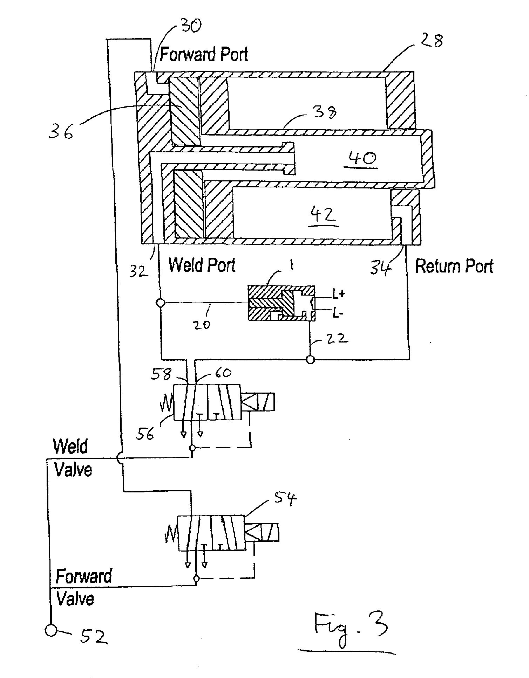

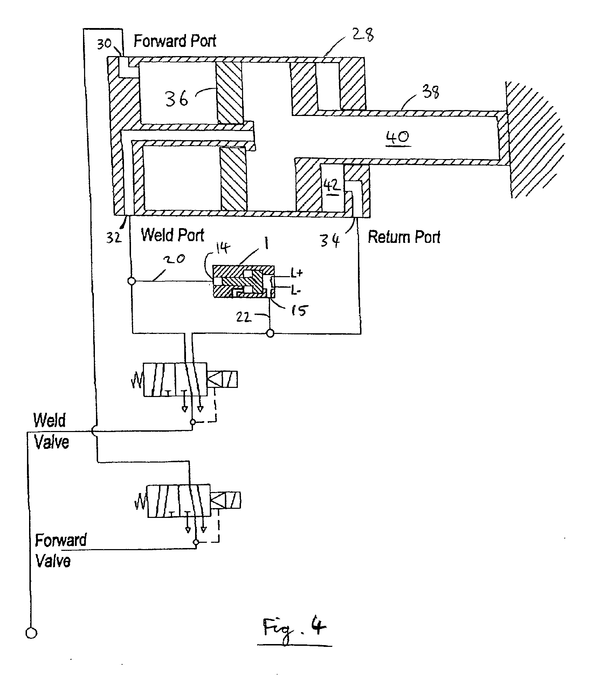

A first embodiment of resistance welding apparatus according to the present invention is shown in Figures 3 and 4. The apparatus shown in Figure 3 comprises a weld cylinder 28 of the three-port double-stroke type which has been described in sufficient detail in the aforementioned International Patent Application PCT/GB01/01700. Welding cylinder 28 comprises first and second welding cylinder pistons 36 and 38. The second welding cylinder piston 38 carries a welding electrode (not shown) which, upon rightward movement of the second welding cylinder piston 38 can be applied against a workpiece so that the workpiece is squeezed between the welding electrode carried by piston 38 and a second electrode, for example a stationary electrode. During the first stroke (the forward stroke) of a welding cycle compressible fluid is supplied from compressible fluid source 52 to forward port 30 of welding cylinder 28 via selector valve 54. This moves first and second welding cylinder pistons 36 and 38 towards the right. After the forward stroke compressible fluid is supplied from source 52 to weld port 32 of welding cylinder 28 via selector valve 56. This causes the second welding cylinder piston 38 to move further towards the right (the first welding cylinder piston 36 remaining stationary during this stroke). During this movement compressible fluid is supplied into chamber 40 formed within the second welding cylinder piston 38. At the same time compressible fluid is exhausted from chamber 42 bounded by the second welding cylinder piston 38 and the housing of welding cylinder 28 via return port 34. Figure 4 shows the state of the welding apparatus at the end of the welding stroke, when the majority of compressible fluid has been exhausted from chamber 42 via return port 34.

As shown in Figures 3 and 4, a pressure sensor such as the one illustrated in Figures 1 and 2 is provided as part of the resistance welding apparatus. Weld forward pilot port 14 of pressure sensor 1 is connected by means of weld forward pilot line 20 to the line from port 58 of selector valve 56 which is connected to weld port 32 of welding cylinder 28. Weld return pilot port 15 is connected by means of weld return pilot line 22 to the line from port 60 of selector valve 56 to return port 34 of welding cylinder 28.

The operation of the resistance welding apparatus illustrated in Figures 3 and 4 will now be described. However, some details of the operation which are conventional, or disclosed in the International Patent Application referred to in the introduction of the present application will not be described. During the first (the forward) stroke compressible fluid is supplied to forward port 30 by means of valve 54 (Figure 3). No compressible fluid is supplied to weld port 32, and compressible fluid is exhausted from chamber 42 via return port 34. The absence of pressure at weld port 32 (and therefore also at weld forward pilot port 14) and the presence of pressure at weld return pilot port 15 due to the exhaustion of compressible fluid from chamber 42 causes piston 4 to remain at its leftmost position. During the weld stroke, before the electrode carried by the second welding cylinder piston 38 abuts against the work piece (i.e. while the second welding cylinder piston 38 moves towards the right with relatively little resistance) the relatively small pressure built-up at weld forward pilot port 14 is not sufficient to move piston 4 towards the right against the force exerted by the exhausting fluid from chamber 42 against the relatively large surface of the right-hand piston face 8.

When the second welding cylinder piston 38 has reached the position shown in Figure 4 (the welding electrode carried by the second welding cylinder piston 38 abutting against the workpiece) pressure builds up in chamber 40 (and therefore also at weld forward pilot port 14), while the pressure in chamber 42 decays (and therefore also at weld return pilot port 15). Once the ratio of the pressure at weld forward pilot port 14 to that at weld return pilot port 15 is greater than the ratio of the surface area of the right-hand piston face 8 to the surface area of the left-hand piston face 10 the piston 4 moves towards the right, causing proximity switch 18 to change its state as described in connection with Figures 1 and 2. Hence the pressure sensor is used to determine the build-up of the welding force applied to the work piece. Once this has reached a predetermined value, welding current is supplied to the welding electrodes under the control of proximity switch 18.

The dimensions of the relevant parts of the resistance welding apparatus (in particular the surface area ratio of the right-hand piston face 8 to the left-hand piston face 10) may be chosen such that the proximity switch 18 changes its state once a desired percentage of welding force between the weld electrodes has been reached, for example 80 or 90%. These dimensions can be determined, for example empirically.

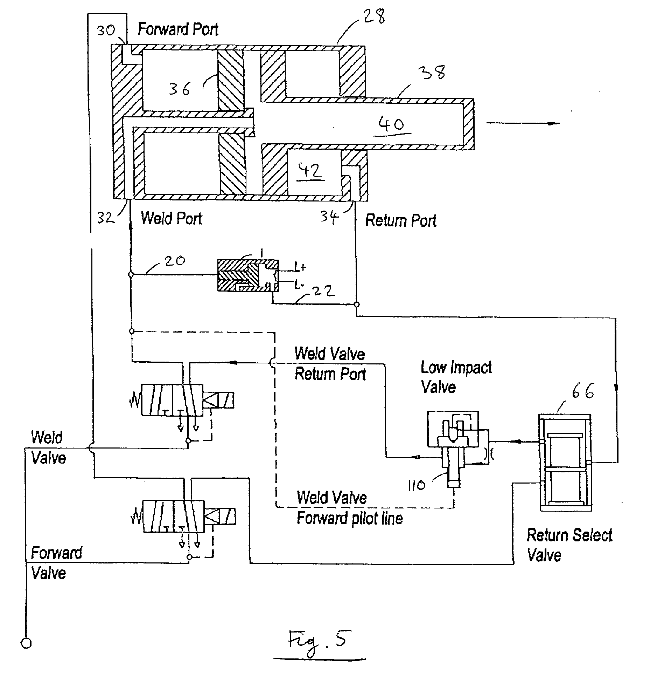

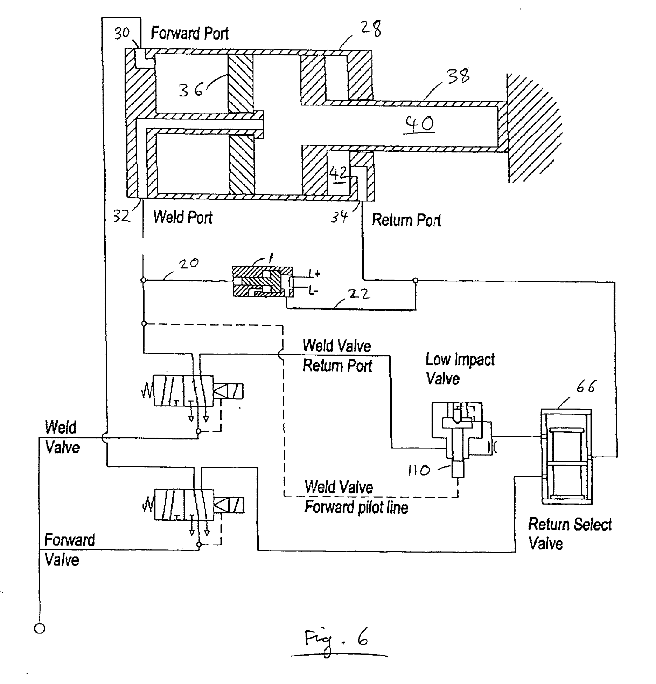

Figures 5 and 6 show a second embodiment of resistance welding apparatus according to the present invention including a pressure sensor such as the one described in connection with Figures 1 and 2. Large parts of the apparatus and its operation are identical to that described with reference to Figures 3 and 4 and will not be repeated here. The principal difference between the apparatus shown in Figures 3 and 4 and that shown in Figures 5 and 6 is that the apparatus shown in Figures 5 and 6 additionally comprises a return select valve 66 and a low impact valve 110, both described in the International Patent Application PCT/GB01/01700. As far as the operation of the pressure sensor 1 is concerned, this embodiment operates in the same manner as that described in connection with Figures 3 and 4.

It will be appreciated that the method of operation described above relies on the monitoring of a ratio of pressures in different parts of resistance welding apparatus and controlling the supply of welding current to the electrodes in dependence on the pressure ratio. This can, of course, be achieved by means other than the pressure sensor described with reference to Figures 1 and 2. The various pressures could, for example, be measured separately (rather than their ratio) and the measurement results processed, for example electronically, so as to determine the moment at which supply of welding current to the electrodes should be started.

It will also be appreciated that the pressure sensor can be provided externally of the welding cylinder 28 (as illustrated in the attached drawings), or it could alternatively be incorporated into the pneumatic cylinder 28, preferably with internal connections between the weld port 32 to the weld forward pilot port 14 and the return port 34 to the weld return pilot port 15. This results in a particularly compact design.

Whilst the present invention has been illustrated above with particular reference to a three-port double-stroke type welding cylinder it will be appreciated that the invention may find application with two-port cylinders. In this case the forward port (also acting as weld port) would be connected to weld forward pilot port 14 of pressure sensor 1 and the return port 34 would be connected to the weld return pilot port 15 of the pressure sensor 1. It is applicable also to four-port (tandem) cylinders in which the chamber 40 is duplicated to increase the electrode force.

While the present invention has been described in its preferred embodiments, it is to be understood that the words which have been used are words of description rather than limitation and that changes may be made to the invention without departing from its scope as defined by the appended claims.

Each feature disclosed in this specification (which term includes the claims) and/or shown in the drawings may be incorporated in the invention independently of other disclosed and/or illustrated features.

## Claims

1. A method of resistance welding comprising monitoring a pressure ratio across opposing faces of a piston used to apply electrodes to a workpiece and controlling the supply of welding current to the electrodes in dependence on the pressure ratio.

2. A method according to Claim 1, wherein one said face of the piston is exposed to a pressure moving the piston to apply the electrodes to the workpiece, and the other said face is exposed to a pressure of fluid being vented to permit movement of the piston.

3. A method according to Claim 1 or Claim 2, comprising supplying the welding current when the pressure ratio exceeds a predetermined value.

4. Resistance welding apparatus comprising a piston having opposing faces for applying welding electrodes to a workpiece, means for measuring a pressure ratio across opposing faces of the piston and means for controlling the supply of welding current to the electrodes in dependence on the pressure ratio.

5. Apparatus according to Claim 4, wherein the piston comprises a first said face to which, in operation, pressure is applied to move the piston to apply the electrodes to the workpiece, and another said face which, in operation, is exposed to a pressure in fluid being vented to permit movement of the piston.

6. A pressure sensor for resistance welding apparatus, the sensor comprising a piston having a first face and an oppositely-directed second face larger than the first face, means for applying to the first face pressure fluid utilised to effect closing movement of electrodes of the welding apparatus to apply a welding force to a workpiece, means for applying to the second face pressure fluid being vented to permit such electrode movement, the relative areas of the first and second faces being chosen such that the force exerted by pressure fluid applied to the first face exceeds the force exerted by the pressure fluid acting on the second face when the welding force applied to the workpiece is a predetermined proportion of a maximum value, and means for controlling an electrical signal in response to movement of the piston resulting from the difference in forces applied to its first and second faces.

7. A sensor according to Claim 6, wherein the controlling means is a switch which is caused to change state by movement of the piston.

8. A sensor according to Claim 7, wherein the switch is a proximity switch.
